# EUROPEAN PATENT SPECIFICATION

(11) **EP 3 885 037 B1**
(45) Date of publication and mention of the grant of the patent: **21.12.2022**
(21) Application number: 21163754.1
(22) Date of filing: 19.03.2021
(51) Int. Cl.: B01J 21/06, B01J 35/00, B01J 37/34

(54) **TITANIUM MATERIAL FOR PURIFICATION OF AIR FROM VOLATILE ORGANIC COMPOUNDS, VOLATILE INORGANIC COMPOUNDS, DUSTS AND MICROORGANISMS, AND METHOD FOR PREPERATION OF TITANIUM MATERIAL FOR PURIFICATION OF AIR FROM VOLATILE ORGANIC COMPOUNDS, VOLATILE INORGANIC COMPOUNDS, DUSTS AND MICROORGANISMS**
TITANMATERIAL ZUR REINIGUNG VON LUFT AUS FLÜCHTIGEN ORGANISCHEN VERBINDUNGEN, FLÜCHTIGEN ANORGANISCHEN VERBINDUNGEN, STÄUBEN UND MIKROORGANISMEN SOWIE VERFAHREN ZUR VORBEREITUNG VON TITANMATERIAL ZUR REINIGUNG VON LUFT AUS FLÜCHTIGEN ORGANISCHEN VERBINDUNGEN, FLÜCHTIGEN ANORGANISCHEN VERBINDUNGEN, STÄUBEN UND MIKROORGANISMEN
MATÉRIAU EN TITANE POUR LA PURIFICATION DE L'AIR DES COMPOSÉS ORGANIQUES VOLATILS, DES COMPOSÉS INORGANIQUES VOLATILS, DES POUSSIÈRES ET DES MICROORGANISMES ET PROCÉDÉ DE PRÉPARATION DU MATÉRIAU EN TITANE POUR LA PURIFICATION DE L'AIR DES COMPOSÉS ORGANIQUES VOLATILS, DES COMPOSÉS INORGANIQUES VOLATILS, DES POUSSIÈRES ET DES MICROORGANISMES

(30) Priority: 25.03.2020 PL 43335520
(43) Date of publication of application: 29.09.2021
(73) Proprietor: Uniwersytet Gdanski, 80-309 Gdansk (PL)
(72) Inventor: Zaleska-Medynska, Adriana, 80-119 Gdansk (PL); Kobylanski, Marek, 68-200 Zary (PL); Parnicka, Patrycja, 76-270 Ustka (PL); Malankowska, Anna, 80-177 Gdansk (PL); Mazierski, Pawel, 83-330 Pepowo (PL); Nadolna, Joanna, 83-330 Pepowo (PL); Bajorowicz, Beata, 80-176 Gdansk (PL); Golabiewska, Anna, 80-180 Gdansk (PL)
(74) Representative: Pawlowska, Justyna

(56) References cited:
- KR-A- 20100 032 841
- PL-B1- 224 718
- SOPHA HANNA ET AL: "Scaling up anodic TiO2nanotube layers for gas phase photocatalysis", ELECTROCHEMISTRY COMMUNICATIONS, ELSEVIER AMSTERDAM, NL, vol. 97, 2 November 2018 (2018-11-02), pages 91-95, XP085545370, ISSN: 1388-2481, DOI: 10.1016/J.ELECOM.2018.10.025
- MARTIN MOTOLA ET AL: "Anatase TiO2nanotube arrays and titania films on titanium mesh for photocatalytic NOXremoval and water cleaning", CATALYSIS TODAY, ELSEVIER, AMSTERDAM, NL, vol. 287, 19 October 2016 (2016-10-19), pages 59-64, XP029963122, ISSN: 0920-5861, DOI: 10.1016/J.CATTOD.2016.10.011

## Description

The invention relates to thin layer of oriented nanotubes of TiO₂, made of a mixture of TiO₂ with photocatalytic properties, and method for their preparation on semi-industrial scale. The invention finds application in purification of air in urban areas. A layer comprising spatially oriented TiO₂ nanotubes may be implemented in devices adapted to purification of air, e.g. photocatalytic towers, for purification of air in urban areas, enabling simultaneous removal of volatile organic compounds (VOCs), inorganic compounds (such as NOₓ and SO₂), dusts and microorganisms, and thus, improvement of air quality in urban areas, as well as in portable or stationary air-purification devices indoors or in vehicle cabins, for removal of chemical pollutants (volatile organic compounds, inorganic compounds such as NH₃, SO₂, NOₓ) and microbiological pollutants (bacteria, fungi, fungi spores, viruses), requiring application of photocatalytic surfaces, with a surface area of at least 80 cm².

Devices based on titanium dioxide with photocatalytic properties are known. Most frequently, titanium dioxide (in the form of nanoparticles) is deposited on a matrix using special binders or pastes. While applying such a method, partial flaking of TiO₂ particles from the matrix may be observed, e.g. during transport of the air purification device. TiO₂ nanotubes obtained by electrochemical method are more stable, because TiO₂ is generated directly on the surface of the sheet / profile made of titanium sheet. Anodic oxidation method also allows for shaping of nanotubes' parameters in a given direction (*i.e.* length of the nanotubes, diameter of the nanotubes, wall thickness of the nanotubes, smooth or corrugated wall), as well as their phase composition, chemical character of elements in the surface layer, and the way of distribution of the nanotubes on the surface of the titanium sheet substrate, by modifications of the synthesis methodology.

Devices for purification of air from organic and inorganic foul odours, and microorganisms, are known, in which a layer with a photocatalytic material is installed.

Patent description No. PL 223188 describes a method for preparation of a material with photocatalytic and biocidal properties, containing spatially oriented nanotubes of titanium dioxide (obtained from analytical grade titanium sheet) modified with metals, particularly noble metals, on laboratory scale. The obtained material is placed in an inert gas atmosphere in a multicomponent solution, containing 30-50% by wt. of alcohol, ions and/or nanoparticles of one or several metals, selected from a group including: silver, gold, platinum, palladium, ruthenium, copper, zinc, nickel, rhodium, tungsten, cobalt, iron in the amount of 0.05-5% by wt. each, and water. The multicomponent solution is mixed in a dark-room for 3-180 min. Then, the material is irradiated using a UV-radiation emitting lamp for 0.5-6 h, and dried at a temperature of 60-100°C for 0.5-24 h. In one variant of the invention, the obtained material is coated with a W/O microemulsion containing liquid hydrocarbons, surfactants, ions, and/or nanoparticles of one or several metals, selected from a group including: silver, gold, platinum, palladium, ruthenium, copper, zinc, nickel, rhodium, tungsten, cobalt, iron. Next, it is coated with a W/O microemulsion containing liquid hydrocarbons, surfactants and a reductant, dried at a temperature of 60-100°C for 0.5-24 h, and subsequently calcinated at a temperature of 250-750°C.

Patent description No. PL 224718 describes a method for preparation of a material with photocatalytic and biocidal properties from analytical grade titanium on laboratory scale, the material containing spatially oriented nanotubes of titanium dioxide modified with metals, particularly noble metals, the method consisting in subjecting a substrate comprising titanium placed in an electrolyte containing ammonium fluoride and ethylene glycol to forced electrical field, cleaning of the obtained material with ultrasound, then drying and calcination, wherein the obtained material is coated with a water-in-oil microemulsion containing liquid hydrocarbons, surfactants, ions and/or nanoparticles of one or several metals, selected from a group including: silver, gold, platinum, palladium, ruthenium, copper, zinc, nickel, rhodium, tungsten, cobalt, iron.

Publication by Sopha et al. (Electrochemistry Communications 97 (2018) 91-95) teaches a method for preparation of Ti strips coated with TiO₂ nanotubes, having a surface of up to 50 cm². The nanotubes are obtained in an electrolyte based on ethylene glycol, containing NH4F (176 nm) and 1.5% by vol. of deionised water under a voltage of 60 V.

TiO₂ nanotubes obtained hitherto were synthesised mainly on laboratory scale from analytical grade titanium, which is connected with high costs of preparation of photocatalytic layers. Thus, the disadvantages of known solutions in the field of preparation of TiO₂ nanotubes for purification of air consist in high costs of analytical grade titanium sheet and components (mainly the electrolyte) used for manufacturing of nanotubes in a larger amount to implement them in air-purification devices. Moreover, the dimensions of the layer prepared on laboratory scale are small (from 5 to 50 cm²). Therefore, obtaining a large surface area of nanotubes requires multiple syntheses, and then, the obtained metal sheets need to be joined.

The goal of the invention was to provide a method of preparation of TiO₂ nanotubes from technical grade titanium to reduce the costs of layers' synthesis and to enable preparation of photocatalytic layers with a large surface area on a large scale (semi-industrial), thanks to which they could be successfully implemented in large air-purification devices. The inventors carried out experimental studies to develop a material and a method in order to eliminate these inconveniences.

Another goal of the invention was to provide a new material - of TiO₂ nanotubes, which would have photocatalytic properties, enabling more effective purification of air from undesirable compounds.

In order to obtain the goals, experiments described in the embodiments were carried out.

According to the invention, a material with desirable photocatalytic properties and a method for preparation enabling to obtain nanotube layers having desirable composition, length, corrugation and structure right away, in order to purify the air, were obtained .

The invention relates to a material with photocatalytic properties for purification of air from volatile organic compounds, volatile inorganic compounds, dusts and microorganisms, the material being based on titanium nanotubes and characterised in that, it has a form of a substrate comprising titanium, on which a layer of oriented TiO₂ nanotubes is formed, made of a mixture of amorphous titanium(IV) oxide and anatase having a ratio ranging from 10:1 to 1:10, with crystallite size from 10 to 40 nm, and comprises from 1 to 10% of titanium ions in the form of Ti³⁺. The nanotubes on the substrate have length from 0.6 to 7 µm and diameter from 20 to 120 nm, and are deposited by electrochemical method on a titanium substrate with a surface area of 80 cm² at minimum and 1000 cm² at maximum.

Preferably, the substrate comprises at least 99.75% of titanium. Preferably, the substrate has the form of titanium sheet.

According to the invention, the method for preparation of a material with catalytic properties for purification of air from volatile organic compounds, volatile inorganic compounds, dusts and microorganisms, consists in subjecting the substrate comprising titanium to at least one processing cycle consisting in anodization by the action of electric current in an electrolyte comprising ethylene glycol, water and fluorides, and next, drying and calcination are carried out. As the substrate comprising titanium, technical grade titanium substrate is used, having titanium content of at least 99.75%, and a surface area of 80 cm² at minimum and 1000 cm² at maximum, and the nanotubes are deposited on the substrate by electrochemical method so that the anodization is carried out in an electrolyte solution, while calcination is carried out at a temperature of at least 450°C, and nanotubes are obtained, having length from 0.6 to 7 µm and diameter from 20 to 120 nm on the surface of the substrate. Moreover, as a result of the method, the nanotubes are composed of a mixture of amorphous titanium(IV) oxide and anatase having a ratio ranging from 10:1 to 1:10, with crystallite size from 10 to 40 nm, and they comprise from 1 to 10% of titanium ions in the form of Ti³⁺.

Preferably, metal sheet with titanium purity > 99.75%, nitrogen content - 0.003% and carbon content 0.04%, hydrogen content 0.009%, iron content - 0.02%, oxygen content - 0.1% is used. Preferably, the substrate has the form of titanium sheet.

Preferably, after 10th and 15th cycle, at least 22% by vol. of the electrolyte solution is replaced with freshly prepared solution.

According to the invention, titanium substrate with a surface area from 80 cm² was used and the composition of the material was selected. To this end, the inventors carried out experimental research to develop technology and method for electrochemical preparation of spatially oriented nanotubes on the surface of titanium sheet with a surface area from 80 to 1000 cm² and more, uniformly covered with nanotubes exhibiting a high photocatalytic activity in the process of decomposition of organic and inorganic compounds in gaseous phase, as well as exhibiting a high stability in a long-term irradiation process (min. 4000 h). Moreover, the electrochemical process of preparation of nanotubes on semi-industrial scale with multiple use of the electrolyte (while maintaining the properties of nanotubes) was optimised to reduce the amounts of used reagents, and thus the costs of preparation of photocatalytic layers in the form of TiO₂ nanotubes.

The material according to the invention has a form of thin layer of oriented TiO₂ nanotubes made of a mixture of amorphous titanium(IV) oxide and anatase having a ratio ranging from 10:1 to 1:10, with crystallite size from 10 to 40 nm, and comprising from 1 to 10% of titanium ions in the form of Ti³⁺, the nanotubes having a length from 0.6 to 7 µm deposited by electrochemical method on the surface of the substrate - titanium sheet/foil. The nanotubes have a diameter from 20 to 120 nm.

In the process for preparation of a material with catalytic properties for purification of air according to the invention, technical grade titanium substrate is used as the substrate, having titanium content of at least 99.75%, with a surface area of at least 80 cm², composed of a mixture of amorphous titanium(IV) oxide and anatase having a ratio ranging from 10:1 to 1:10, with crystallite size from 10 to 40 nm, and comprising from 1 to 10% of titanium ions in the form of Ti³⁺. Anodization is carried out in a known electrolyte solution comprising ethylene glycol, water and fluorides, while calcination is carried out at a temperature of at least 450°C.

According to the invention, after 10th and 15th cycle, at least 22% by vol. of the electrolyte solution is replaced with freshly prepared solution.

The advantage of the invention, comparing to currently known materials based on mprising TiO₂ nanostructures, is the possibility to prepare a material which may be used multiple times. In the case when the photocatalytic activity decreases in time, the material according to the invention may be subjected to easy regeneration. The method for synthesis of spatially developed nanotubes directly on the substrate ensures their high adhesion to the substrate, namely titanium sheet. In this connection, the obtained material may be used directly after its synthesis - impregnation and/or coating the surface with the nanotubes is not required.

The invention is described by the examples and the drawing, wherein:

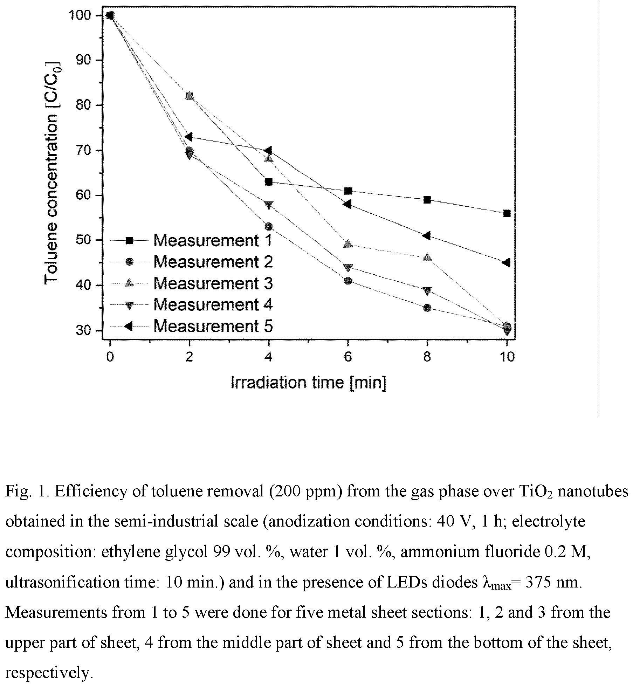

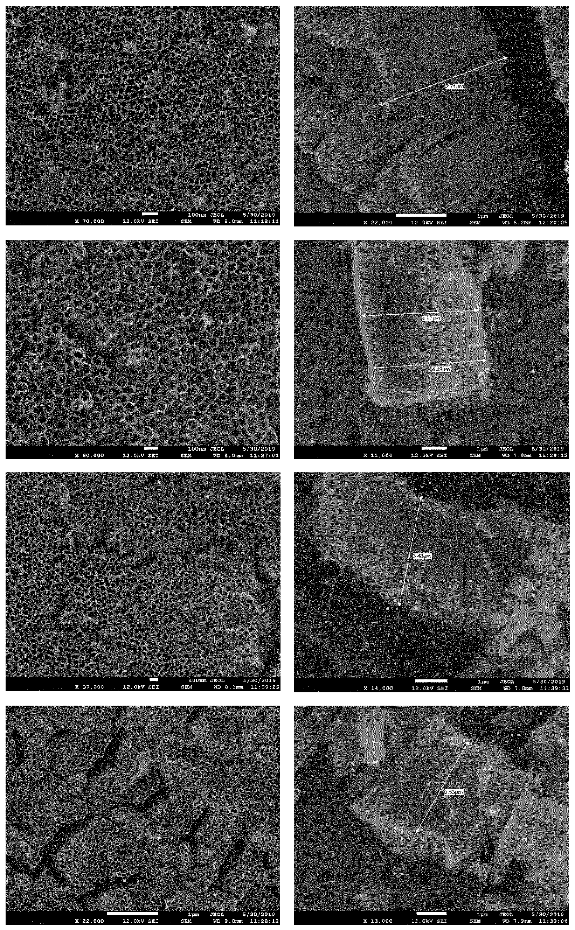

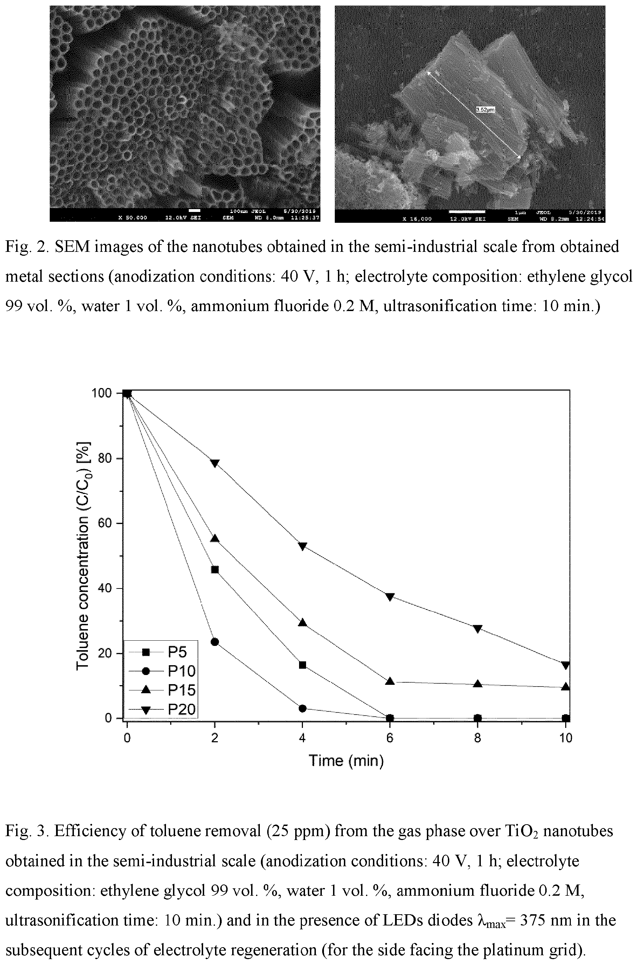

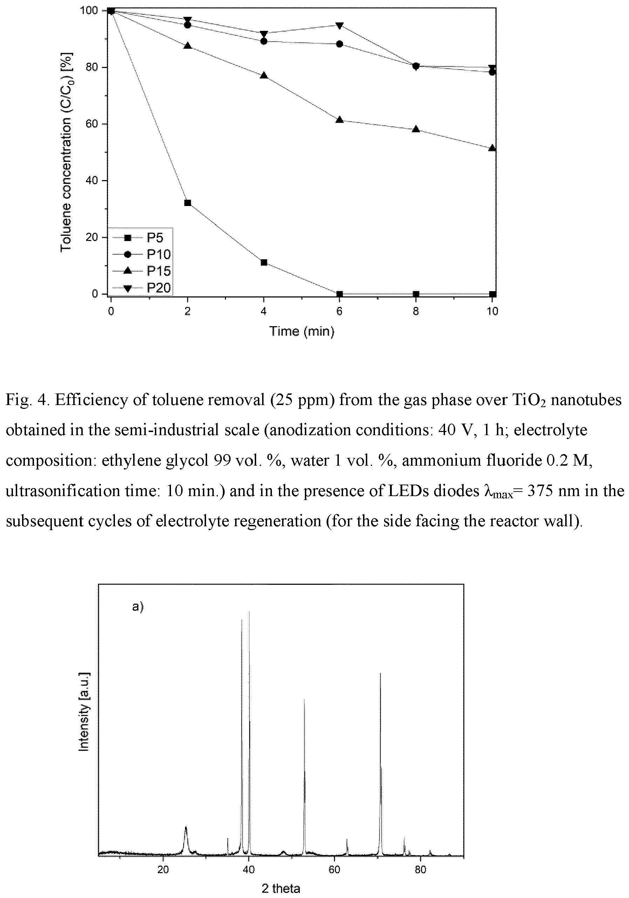

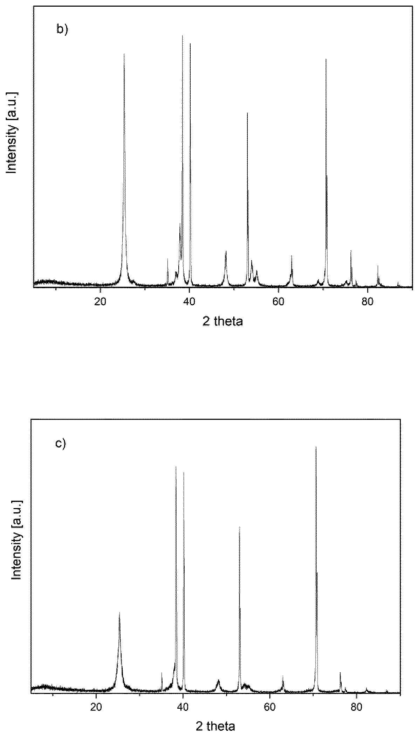

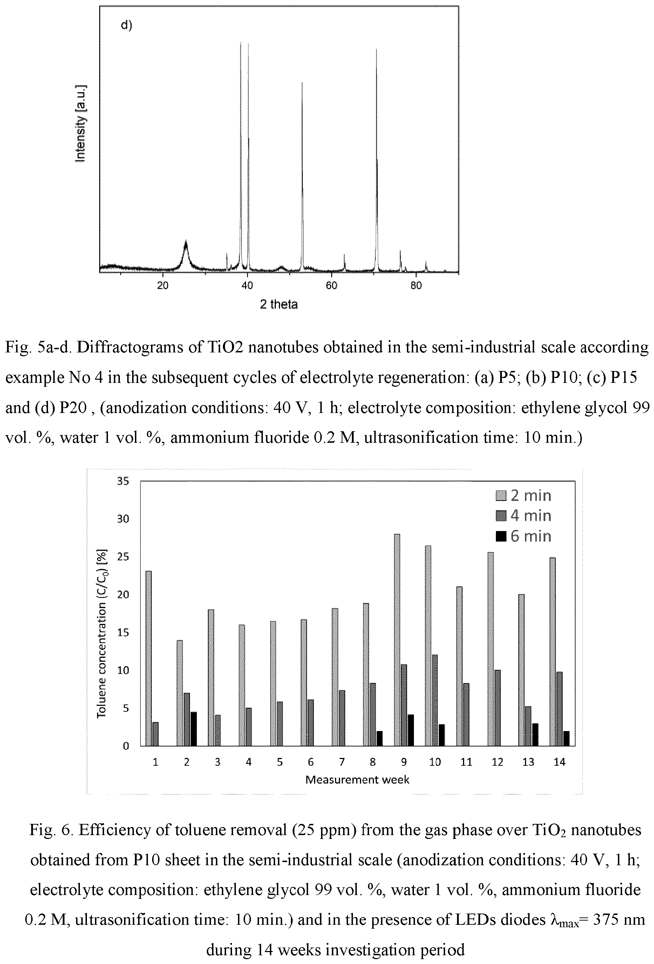

Fig. 1 presents effectivity of toluene removal from gaseous phase in the presence of nanotubes TiO₂ nanotubes obtained according to the invention; Fig. 2 - SEM photographs of fragments of TiO₂ nanotubes; Fig. 3 and 4 - effectivity of toluene removal from gaseous phase in the presence of TiO₂ nanotubes; Fig. 5a-d - diffraction patterns of TiO₂ nanotubes; Fig. 6 - effectivity of toluene removal.

### Example 1

Description of the developed technology for preparation of TiO₂ nanotubes, which may be used for titanium sheets with a surface area from 80 to 1000 cm² on semi-industrial scale.

In this example, surface area of titanium sheet was 600 cm².

Metal sheet made of technical grade titanium containing at least 99.75% of titanium was cleaned in an ultrasonic bath and single solvents, *i.e.* acetone, isopropanol, ethanol, methanol and deionised water. The process of cleaning of the titanium foil/sheet was carried out for 10 min in each of the solvents mentioned above, maintaining the listed order. The process of electrochemical oxidation was carried out in a cuboidal reactor in a two-electrode system, using rectangular platinum mesh as the cathode. It is also possible to perform the method in another system, e.g. in a cylindrical reactor, using cylindrical platinum mesh. Electrolyte containing ethylene glycol, deionised water, and ammonium fluoride was introduced into the reaction chamber. Application of an electrolyte containing 0.1 M of phosphorous(V) acid and 0.25% by wt. of hydrofluoric acid is also possible. Below, detailed qualitative and quantitative compositions of the individual electrolytes used for TiO₂ synthesis and various applied conditions of preparation of TiO₂ are gathered.

Cleaned titanium sheet with surface area of 600 cm² and platinum mesh with dimensions of 232×162 mm were placed in the reaction chamber. In this example, the sheet had dimensions of 200×300 mm. Adequate distance between the cathode (platinum mesh) and the titanium foil, *i.e.* 15-20 mm, was ensured. Next, a mechanical stirrer was installed in the reaction chamber. Electrochemical oxidation was carried out in the voltage range from 20 to 50 V, for a period ranging from 1 to 2 h. Below, exact conditions and anodization time for this embodiment are listed. When the process of preparation of TiO₂ nanotubes was completed, titanium sheet, on which the nanotubes were obtained, was washed with deionised water and left to dry for 24 h. The obtained material was cleaned by submersing it in deionised water in an ultrasound bath for 5-10 min, dried in a dryer at 60-80°C for 24 h - in this example, for 10 minutes at 60°C. Then, the metal sheets were calcinated - subjected to a thermal treatment in a flat furnace at a temperature of 450°C for 1 h - temperature rise was 2°C/min until the highest temperature was obtained. Below and in Table 1, conditions of preparation of TiO₂ nanotubes on semi-industrial scale, as well as the nanotubes' characteristics, are reported.

Conditions of preparation of TiO₂ nanotubes on semi-industrial scale in Example 1:
a) Titanium foil - Titanium Grade 1, 2000 pcs, melt TM180701-02,
   ➢ Elementary composition:
      ▪ Titanium content > 99.75%,
      ▪ Nitrogen content - 0.003%,
      ▪ Carbon content - 0.042%,
      ▪ Hydrogen content - 0.009%,
      ▪ Iron content - 0.020%,
      ▪ Oxygen content - 0.1110%,
      ▪ Other elements <0.040%,
   ➢ Mechanical properties
      ▪ Yield strength: 220 MPa,
      ▪ Tensile strength: 285 MPa,
b) Conditions of anodization:
   ➢ Anodization time: 1-2 h in this example,
   ➢ Voltage: 30-50 V,
c) Electrolyte composition:
   ➢ Concentration of ammonium fluoride in the electrolyte 0,09, but it was possible to carry out the reaction with the content up to 0.2 M,
   ➢ Content of deionised water in the electrolyte 1, but it was possible to carry out the reaction with the content up to 2% by vol.,
   ➢ Content of ethylene glycol in the electrolyte 98, but it was possible to carry out the reaction with the content up to 99% by vol.,
d) Configuration of the reaction chamber:
   ➢ Three reactor types were tested:
      ∘ reactor No. I with dimensions of 90×360×270 mm equipped with a cooling jacket and one stirrer positioned centrally in the reaction chamber,
      ∘ reactor No. II without a cooling jacket, with dimensions of 130×360×250 mm, equipped with one stirrer positioned centrally in the reaction chamber,
      ∘ reactor No. III without a cooling jacket, with dimensions of 90×360×350 mm, equipped with two stirrers positioned close to side walls of the reaction chamber,
   ➢ Capacity of the reaction chamber from 8 to 9.8 L,
   ➢ Total volume of the electrolyte in the reaction chamber from 7.5 to 9 L,
   ➢ Distance between platinum mesh and titanium foil: 15-20 mm,
   ➢ Stirring rate 200-500 rpm,
   ➢ Number of mechanical stirrers used: 1-2,
   ➢ Locations of mechanical stirrers in the reaction chamber (central and at the sides of the chamber),
e) Duration of cleaning in the ultrasound bath: up to 10 min,
f) Solvents used for cleaning of the metal sheet with TiO₂ nanotubes formed: (water, isopropanol or methanol) up to 10 L of the solvent.
g) Calcination at 450°C for 1 h (2°C/min).

Results of activities of nanotubes obtained according to Example 1 are presented in Table 1. The results confirm photocatalytic effectiveness and application for purification of air.

Additionally, a process according to the described method using conditions and electrolyte composition reported in Table 1 was carried out.

During tests, photocatalytic activity was evaluated by placing a section of the metal sheet obtained after anodic oxidation (a fragment with dimensions of 2 cm×2 cm, cut out always from the same spot of the sheet) in the reactor. Table 1 gathers selected conditions of preparation developed according to the invention, while Example 2 lists the selected conditions.

**Table 1. Qualitative and quantitative compositions of the individual electrolytes applied during preparation of TiO₂ nanotubes and various applied conditions of preparation of TiO₂, as well as properties of the nanotubes obtained on a metal sheet section with dimensions of 2 cm×2 cm cut from the centre of a large sheet after the anodization process.**

| Conditions of anodization | | Electrolyte composition | | | Time in the bath [min] | Reactor configuration | Length (L) [µm] and diameter (φ) [nm] of nanotubes | Ratio of amorphous TiO₂ to anatase | Crystallite size [nm] | Ti³⁺ ions content [% at.] | Effectivity of toluene removal (Cₒ=200 ppm) after 10 min (λ=375 nm) [%] |
|---|---|---|---|---|---|---|---|---|---|---|---|
| Voltage [V] | Time [h] | ethylene glycol [% by vol.] | water [% by vol.] | ammonium fluoride [M] | | | | | | | |
| 30 | 1 | 98 | 2 | 0.09 | 5 | I | L = 1.5 Φ = 47 | 1:1 | 35 | 5 | 41 |
| 30 | 1 | 99 | 1 | 0.2 | 5 | II | L = 1.74 Φ = 60 | 1:2 | 36 | 4 | 44 |
| 30 | 2 | 98 | 2 | 0.2 | 10 | II | L = 1.99 Φ = 44 | 01:10:00 | 38 | 8 | 54 |
| 30 | 1 | 99 | 1 | 0.2 | 5 | II | L = 0.63 Φ = 29 | 1:6 | 28 | 3 | 40 |
| 30 | 1 | 99 | 2 | 0.2 | 10 | II | L = 1.27 Φ = 28 | 1:7 | 30 | 3 | 44 |
| 30 | 1 | 99 | 1 | 0.2 | 10 | II | L = 1.31 Φ = 56 | 3:1 | 32 | 1 | 20 |
| 40 | 1 | 99 | 1 | 0.2 | 10 | III | L = 3.48 Φ = 47 | 01:10:00 | 10 | 9 | 55 |
| 50 | 1 | 99 | 1 | 0.2 | 10 | III | L = 5.52 Φ = 111 | 1:8 | 40 | 10 | 53 |
| 50 | 1 | 98 | 2 | 0.09 | 5 | III | L=7 Φ = 90 | 1:8 | 12 | 7 | 52 |
| 30 | 2 | 98 | 2 | 0.09 | 5 | III | L = 0.6 Φ = 50 | 10:1 | 30 | 2 | 10 |

### Example 2

The method described above was carried out but under out except that under different conditions and that different material was used, as described below.
1. Description of the material's composition:
   Titanium foil - Titanium Grade 1, 2000 pcs, melt TM180701-02,
   ➢ Elementary composition:
      ▪ Titanium content > 99.75%,
      ▪ Nitrogen content - 0.003%,
      ▪ Carbon content - 0.042%,
      ▪ Hydrogen content - 0.009%,
      ▪ Iron content - 0.020%,
      ▪ Oxygen content - 0.1110%,
      ▪ Other elements <0.040%,
   ➢ Mechanical properties
      ▪ Yield strength: 220 MPa,
      ▪ Tensile strength: 285 MPa,
2. Description of the preparation process:
   a) Conditions of anodization:
      ➢ Anodization duration: 1 h,
      ➢ Voltage: 40 V,
   b) Electrolyte composition:
      ➢ Concentration of fluorides in the electrolyte 0.2 M,
      ➢ Content of water in the electrolyte 1% by vol.,
      ➢ Content of ethylene glycol in the electrolyte 99% by vol.,
   c) Configuration of the reaction chamber No. III made of polycarbonate resin, reactor with dimensions of 90×360×350 mm without a cooling jacket,
   d) Capacity of the reaction chamber 9.8 L,
   e) Total volume of the electrolyte in the reaction chamber 9.0 L,
   f) Distance between platinum mesh and titanium foil: 20 mm,
   g) Stirring rate 250 rpm,
   h) Number of mechanical stirrers used: 2.
   i) Locations of mechanical stirrers in the reaction chamber: the sides of the reactor,
   j) Distance between titanium foil and platinum mesh - 20 mm
   k) Duration of cleaning in the ultrasound bath: 10 min,
   l) Solvent used for cleaning of the metal sheet with TiO₂ nanotubes (deionised water),
   m) Calcination at 450°C for 1 h (temperature rise in time 2°C/min).
Results of activity of nanotubes obtained under these conditions are described in detail in Example 3.

### Example 3

Confirmation of photocatalytic activity of nanotubes obtained in Example 2.

To check the quality of the obtained nanotubes described in Example 2, also photocatalytic activity of sections was tested in a model reaction of toluene degradation in gaseous phase in the presence of LEDs (λₘₐₓ=375 nm) with radiation intensity of 15 mW/cm². The photocatalytic layer was placed on the back wall of the photoreactor. To determine the activity of the obtained TiO₂ nanotubes, photoreactor made of stainless steel was filled with a mixture of air and toluene having concentration of 200 ppm. The gaseous mixture was being passed through the photoreactor for one minute (with a flow rate of 0.3 dm³·min⁻¹), and then, the valves were closed and the reaction system kept in darkness for 30 minutes to achieve the state of adsorption-desorption equilibrium between the photocatalytic layer and toluene. Before commencing irradiation, a 200-µl sample of the gaseous mixture was collected from the photoreactor (using a gas-tight syringe), as a reference sample in relation to which the degree of toluene decay during the photocatalytic process was estimated. The irradiation was carried out for 10 minutes. To evaluate the course of the process, samples were collected from the photoreactor in two-minute intervals and analysed chromatographically. Decay of toluene in gaseous phase was measured by a Trace 1300 gas chromatograph from Termo Scientific, equipped with a FID detector. A capillary column of RTX-5 type (30 m×0.25 mm, 0.5 µm) was used for the measurements. Nitrogen was used as the carrier gas.

The samples of nanotubes obtained according to Example 2 exhibited an ability to degrade toluene (200 ppm) in the range of 45-70% after 10 minutes of the process duration, which is shown in Fig. 1.

Fig. 2 presents characteristics of the layers obtained in accordance with the conditions according to the invention - or Example 2 (anodization conditions: 40 V, 1 h, electrolyte composition: ethylene glycol 99% by vol., water 1% by vol., ammonium fluoride 0.2 M, bath duration 10 minutes).

Photographs of surfaces and cross-sections of TiO₂ nanotubes are shown in Fig. 2. Photographs of the following 2 cm×2 cm sections are shown: I-III row - from the upper part of the metal sheet, IV row - from the middle part of the metal sheet, and V row - from the bottom part of the metal sheet. The photographs indicate that there are spatially oriented nanotubes with lengths from 2.7 to 4.5 µm on the surface of titanium foil. On the other hand, diameter of the nanotubes was from 44 to 50 nm. X-ray analysis indicated that the nanotubes were composed mostly of TiO₂ in the form of anatase, with a small admixture of amorphous TiO₂ (10:1), and the average size of crystallites from which the nanotubes were made of amounted to approx. 10 nm. Analysis using photoelectron spectroscopy (XPS) proved that the majority of titanium ions occurs in the surface layer in the form of Ti⁴⁺ (96% at.), and a small amount of them has the form of Ti³⁺ (4% at.). Nanotubes obtained at a voltage of 50 V (anodization conditions: 50 V, 1 h, electrolyte composition: ethylene glycol 99%, water 1%, ammonium fluoride 0.2 M, bath duration 10 minutes) were longer (from 5.12 to 6.2 µm), however, their photocatalytic activity was close to that of the nanotubes obtained at a voltage of 40 V. The nanotubes obtained at 40 V were characterised by a higher adhesion to the substrate.

### Example 4.

### Regeneration of electrolyte used for preparation of photocatalytic layers on semi-industrial scale

Because of large amounts and high costs of the electrolyte used for preparation of photocatalytic layers, the goal of the invention was to develop a method enabling reuse of the electrolyte or its regeneration. Starting amount of the electrolyte (9 L) contained 8.91 L of ethylene glycol, 0.09 L of water and 66.6 g of ammonium fluoride. After 10th and 15th cycle of TiO₂ nanotubes synthesis, 2 L (22% by vol. of the whole electrolyte, *i.e.* 9 L) of the above electrolyte were replaced with freshly prepared solution (2 L of the electrolyte were drained of the reactor and a fresh portion of the reagents was added, *i.e.* 1980 ml of ethylene glycol, 20 ml of water, 14.8 g of ammonium fluoride. Table 2 reports exact conditions and method for realisation of the electrolyte regeneration process. A synthesis cycle is understood as follows: one anodic oxidation of one sheet made of titanium in the given electrolyte, *i.e.* the sample prepared in 10th cycle was obtained by anodization of the Ti foil in a solution which was used for the 10th time.

**Table 2. TiO₂ nanotubes obtained on semi-industrial scale with electrolyte regeneration (anodization conditions: 40 V, 1 h, electrolyte composition: ethylene glycol 99% by vol., water 1% by vol., ammonium fluoride 0.2 M, bath duration 10 minutes).**

| Number of titanium sheet | Electrolyte use cycle | Notes |
|---|---|---|
| Freshly prepared electrolyte 9 L (8.91 L of ethylene glycol, 0.09 L of water, 66.6 g of ammonium fluoride) | | |
| P1 | 1 | |
| P2 | 2 | |
| P3 | 3 | |
| P4 | 4 | |
| P5 | 5 | Analysis of TiO₂ nanotubes |
| P6 | 6 | |
| P7 | 7 | |
| P8 | 8 | |
| P9 | 9 | |
| P10 | 10 | Analysis of TiO₂ nanotubes |

| Replacement of 2 L of the electrolyte volume (1980 ml of ethylene glycol, 20 ml of water, 14.8 g of ammonium fluoride) | | |
|---|---|---|
| P11 | 11 | |
| P12 | 12 | |
| P13 | 13 | |
| P14 | 14 | |
| P15 | 15 | Analysis of TiO₂ nanotubes |

| Replacement of 2 L of the electrolyte volume (1980 ml of ethylene glycol, 20 ml of water, 14.8 g of ammonium fluoride) | | |
|---|---|---|
| P16 | 16 | |
| P17 | 17 | |
| P18 | 18 | |
| P18 | 19 | |
| P20 | 20 | Analysis of TiO₂ nanotubes |

To control the quality of the obtained TiO₂ nanotubes for the series in which electrolyte regeneration was applied, their crystal structure was examined by X-ray diffraction (XRD) and their photocatalytic activity was tested in a model reaction of toluene degradation (25 ppm) in gaseous phase in the presence of LEDs (λₘₐₓ=375 nm).

The obtained TiO₂ nanotubes were checked for their photocatalytic activity and sheet appearance (by visual observation). Four representative sections (denoted as P5, P10, P15, and P20) were cut out from sheets obtained in the 5th, 10th, 15th, and 20th cycle of anodic oxidation in one electrolyte solution and their photocatalytic activity was tested at both sides. On the basis of obtained results, it was found that photocatalytic activity of sample sections (P5, P10, P15, P20) decreased slightly with every anodization carried out in the electrolyte subjected to regeneration - the results are shown in Table 3 and in Fig. 3. For the sample obtained in the 20th cycle (P20), approx. 80% of toluene degradation was observed after 10 minutes of irradiation. Owing to the developed procedure of electrolyte regeneration, photoactive layers may be obtained during twenty anodizations in the same electrolyte (replacing up to 2 L (22% by vol.) of the electrolyte after the 10th and 15th cycle of TiO₂ nanotubes' preparation).

**Table 3. Effectivity of toluene removal (25 ppm) from gaseous phase in the presence of TiO₂ nanotubes obtained on semi-industrial scale (anodization conditions: 40 V, 1 h, electrolyte composition: ethylene glycol 99% by vol., water 1% by vol., ammonium fluoride 0.2 M, bath duration 10 minutes) in the presence of LEDs with λₘₐₓ=375 nm in subsequent cycles of electrolyte regeneration (for the side directed towards the platinum mesh).**

| Toluene concentration C/C₀ [%] | | | | |
|---|---|---|---|---|
| Irradiation time [min] | P5 | P10 | P15 | P20 |
| 0 | 100 | 100 | 100 | 100 |
| 2 | 45.8 | 23.5 | 55.2 | 78.9 |
| 4 | 16.4 | 3.0 | 29.3 | 53.2 |
| 6 | 0 | 0 | 11.2 | 37.6 |
| 8 | 0 | 0 | 10.4 | 27.9 |
| 10 | 0 | 0 | 9.50 | 16.6 |

Additionally, an analysis of photoactivity at both sides of the TiO₂ sheet was carried out and it was observed that the side directed towards the platinum mesh (during preparation of the nanotubes) is more active than the TiO₂ surface directed towards the reactor's wall. Table 4 and Fig. 4 present photocatalytic effectiveness of P5, P10, P15, P20 samples at the opposite side of the sample (the side directed towards the reactor's wall). It was found that the activity of TiO₂ layers obtained after the 5the cycle of anodic oxidation differed depending on the location in which the nanotubes were formed - TiO₂ layers obtained on the side of the titanium sheet directed towards the reactor's wall exhibited significantly lower photocatalytic activity.

On the basis of the above studies, it was ascertained that the more photocatalytically active surface of titanium sheet comprising nanotubes, is the side directed towards the platinum mesh during anodic oxidation.

**Table 4. Effectivity of toluene removal (25 ppm) from gaseous phase in the presence of TiO₂ nanotubes obtained on semi-industrial scale (anodization conditions: 40 V, 1 h, electrolyte composition: ethylene glycol 99% by vol., water 1% by vol., ammonium fluoride 0.2 M, bath duration 10 minutes) in the presence of LEDs with λₘₐₓ=375 nm in subsequent cycles of electrolyte regeneration (for the side directed towards the reactor wall).**

| Toluene concentration C/C₀ [%] | | | | |
|---|---|---|---|---|
| Irradiation time [min] | P5 | P10 | P15 | P20 |
| 0 | 100 | 100 | 100 | 100 |
| 2 | 32.2 | 95.0 | 87.4 | 97.0 |
| 4 | 11.1 | 89.2 | 77.0 | 92.0 |
| 6 | 0 | 88.2 | 61.4 | 95.0 |
| 8 | 0 | 80.5 | 58.1 | 80.5 |
| 10 | 0 | 78.3 | 51.4 | 80.0 |

Additionally, analysis by X-ray diffraction (XRD) was carried out for P5, P10, P15, and P20 plates to confirm the crystal structure of TiO₂. Fig. 5a, 5b, 5c, and 5d, shows the analysis of crystallographic structure for the nanotubes denoted as P5, P10, P15, and P20, respectively. The nanotube layers were obtained according to Example 4. The obtained results confirm that the obtained TiO₂ nanotubes occur mainly in the form of anatase (crystalline form of titanium dioxide, which is shown in Fig. 5a-d). Large width of the peak at 2θ of approx. 25° proves presence of TiO₂ also in the amorphous form. Anatase is a form of TiO₂ characterised by a high photocatalytic activity. The research showed that presence of anatase in the range of 80-100% allowed for obtaining the most active nanostructures.

On the basis of results presented in the diffraction patterns, parameters of crystal structure of TiO₂ nanotubes were determined, presented in Table 5.

**Table 5. Parameters of crystal structure of TiO₂ nanotubes obtained on semi-industrial scale according to Example 4 in subsequent cycles of electrolyte regeneration.**

| Name | Anatase | | |
|---|---|---|---|
| | a [A] | c [A] | d [A] |
| P5 | 3.7910(3) | 9.480(2) | 80 |
| P10 | 3.7825(2) | 9.501(1) | 200 |
| P15 | 3.7821(4) | 9.469(2) | 90 |
| P20 | 3.7845(1) | 9.452(4) | 50 |

### Example 5

### Stability tests of photocatalytic activity of nanostructures obtained on semi-industrial scale

Tests of photocatalytic activity of TiO₂ nanotubes obtained according to the method described in Example 2 having properties described in Example 4 was carried out during 14 weeks. Every week, the same fragment of P10 sample was examined to evaluate its effectivity in toluene photodegradation (25 ppm) in gaseous phase under radiation emitted by LEDs (375 nm). The results are presented in Fig. 6. The study proved that after fourteen weeks of tests, the sample was exhibiting still high capacity for toluene photodegradation. In every case, the result after 8th minute of irradiation was below the level of detection.

### Example 6

### Evaluation of effectivity of TiO₂ nanotubes under real conditions

TiO₂ nanotubes obtained according to Example 4 was implemented in a device for purification of external air. Detectors for measurements of concentration of pollutants at the device's inlet and outlet were installed in the device. A model pollutant was prepared (toluene with concentration of 50 ppm =50000 mg/m³). A stream of toluene was directed towards the air inlet, to the device's interior. On the basis of measurements of pollutant concentration at the inlet and at the outlet, the effectivity of action of TiO₂ nanotubes under real conditions was evaluated (Table 6). The tests proved a high effectivity of TiO₂ nanotubes in purification of air under real conditions. The effectivity of purification of gaseous phase exceeded 98%.

**Table 6. Results of real measurements of application of TiO₂ nanotubes (obtained according to Example 4 on semi-industrial scale) in a photocatalytic tower**

| Measurement | INLET | OUTLET | Effectivity [%] |
|---|---|---|---|
| | TVOC [mg/m³] | TVOC [mg/m³] | |
| 1 | 0.706 | 0.001 | 99.9 |
| 2 | 1.485 | 0.004 | 99.7 |
| 3 | 2.589 | 0.002 | 99.9 |
| 4 | 3.729 | 0.005 | 99.9 |
| 5 | 4.861 | 0.002 | 100.0 |
| 6 | 7.265 | 0.003 | 100.0 |
| 7 | 7.733 | 0.003 | 100.0 |
| 8 | 7.933 | 0.002 | 100.0 |
| 9 | 9.369 | 0.014 | 99.9 |
| 10 | 9.068 | 0.036 | 99.6 |
| 11 | 5.696 | 0.003 | 99.9 |
| 12 | 4.928 | 0.003 | 99.9 |
| 13 | 4.628 | 0.006 | 99.9 |
| 14 | 4.361 | 0.075 | 98.3 |
| 15 | 4.193 | 0 | 100.0 |
| 16 | 3.925 | 0.003 | 99.9 |
| 17 | 3.856 | 0.006 | 99.8 |
| 18 | 3.444 | 0.06 | 98.3 |
| 19 | 3.052 | 0.02 | 99.3 |

## Claims

1. Material with photocatalytic properties for purification of air from volatile organic compounds, volatile inorganic compounds, dusts and microorganisms, based on titanium nanotubes, **characterised in that**, the material has a form of a substrate comprising titanium, on which a layer of oriented TiO₂ nanotubes is formed that ismade of a mixture of amorphous titanium(IV) oxide and anatase having a ratio ranging from 10:1 to 1:10, with crystallite size from 10 to 40 nm, and comprising from 1 to 10% of titanium ions in the form of Ti³⁺, while the nanotubes on the substrate have length from 0.6 to 7 µm and diameter from 20 to 120 nm and are deposited by electrochemical method on a titanium substrate with a surface area of 80 cm² at minimum and 1000 cm² at maximum.

2. The material according to claim 1, while it comprises at least 99.75% of titanium.

3. The material according to claim 1, while the substrate has the form of titanium sheet.

4. Method for preparation of the material with catalytic properties for purification of air from volatile organic compounds, volatile inorganic compounds, dusts and microorganisms, during the method comprising a substrate comprising titanium is treated by at least one processing cycle of anodization by the action of electric current in an electrolyte that comprising ethylene glycol, water and fluorides, and next, drying and calcination are performed , **characterised in that**, as the substrate comprising titanium, technical grade titanium substrate is used, having titanium purity of at least 99.75%, with a surface area of 80 cm² at minimum and 1000 cm² at maximum, and the nanotubes are deposited on the substrate by electrochemical method, after that the anodization is being performed in an electrolyte solution, while calcination is being performed at a temperature of at least 450°C, and nanotubes are obtained having length from 0.6 to 7 µm and diameter from 20 to 120 nm on the surface of the substrate, and moreover, the nanotubes comprises a mixture of amorphous titanium(IV) oxide and anatase having a ratio ranging from 10:1 to 1:10, with crystallite size from 10 to 40 nm, and they contain from 1 to 10% of titanium ions in the form of Ti³⁺.

5. The method according to claim 4, while metal sheet with titanium purity > 99.75%, nitrogen content - 0.003% and carbon content 0.04%, hydrogen content 0.009%, iron content - 0.02%, oxygen content - 0.1% is used.

6. The method according to claim 4, while after 10th and 15th cycle, at least 22% by vol. of the electrolyte solution is replaced with freshly prepared solution.

7. The method according to claim 4, while the substrate has the form of titanium sheet.

## Patentansprüche

1. Material mit photokatalytischen Eigenschaften zur Reinigung der Luft von flüchtigen organischen Verbindungen, flüchtigen anorganischen Verbindungen, Stäuben und Mikroorganismen, auf Titan-Nanoröhrchen basierend, **dadurch gekennzeichnet, dass** das Material die Form eines Titan enthaltenden Untergrundes hat, auf dem sich eine Schicht orientierter Nanoröhrchen TiO₂ bildet, aus Mischung des amorphischen Titan(IV)-oxids und Anatas, im Verhältnis von 10:1 bis 1:10, mit Kristallitgröße von 10 bis 40 nm und von 1 % bis 10 % Titan-Ionen in Form von Ti³⁺ enthaltend, wobei die Nanoröhrchen auf dem Untergrund eine Länge von 0,6 bis 7 µm und Durchmesser von 20 bis 120 nm haben und mit der elektrochemischen Methode auf der Titanunterlage mit Mindestfläche gleich 80 cm² und Höchstfläche gleich 1000 cm² abgesetzt werden.

2. Material nach Anspruch 1, während es mindestens 99,75 % Titan enthält.

3. Material nach Anspruch 1, während der Untergrund die Form eines Titanblechs hat.

4. Verfahren der Vorbereitung des Materials mit katalytischen Eigenschaften zur Reinigung der Luft von flüchtigen organischen Verbindungen, flüchtigen anorganischen Verbindungen, Stäuben und Mikroorganismen während des Verfahrens, das einen Untergrund, der Titan enthält, der zumindest einem Verarbeitungszyklus unterzogen wird, der Anodisierung durch Einwirkung elektrischen Stroms im Elektrolyten, der Ethylenglycol, Wasser und Fluoride enthält, umfasst, wonach Trocknung und Kalzinierung durchgeführt wird, **dadurch gekennzeichnet, dass** als Titan enthaltender Untergrund Titanuntergrund technischer Klasse mit Titanreinheit mindestens 99,75 %, mit Mindestfläche gleich 80 cm² und Höchstfläche von 1000 cm² verwendet wird und die Nanoröhrchen im Untergrund mit der elektrochemischen Methode abgesetzt werden, wonach Anodisierung in der Elektrolytlösung durchgeführt wird, während die Kalzinierung bei Temperatur von mindestens 450 °C durchgeführt wird und die erhaltenen Nanoröhrchen eine Länge von 0,6 bis 7 µm und Durchmesser von 20 bis 120 nm auf der Oberfläche des Untergrundes haben, und außerdem eine Mischung des amorphischen Titan(IV)-oxids und Anatas im Verhältnis von 10:1 bis 1:10, mit Kristallitgröße von 10 bis 40 nm und von 1 % bis 10 % Titan-Ionen in Form von Ti³⁺ enthaltend, enthalten.

5. Verfahren nach Anspruch 4, während ein Blech mit Titanreinheit > 99,75 %, Stickstoffgehalt - 0,003 % und Kohlenstoffgehalt - 0,04 %, Wasserstoffgehalt - 0,009 %, Eisengehalt - 0,02 %, Sauerstoffgehalt - 0,1 % verwendet wird.

6. Verfahren nach Anspruch 4, während nach dem 10. und 15. Zyklus mindestens 22 % des Volumens der Elektrolytlösung durch frisch zubereitete Lösung ersetzt wird.

7. Verfahren nach Anspruch 4, während der Untergrund die Form des Titanblechs hat.

## Revendications

1. Matériau à propriétés photocatalytiques pour la purification de l'air des composés organiques volatils, des composés inorganiques volatils, de la poussière et des micro-organismes, à base de nanotubes de titane, **caractérisé par le fait que** le matériau se présente sous la forme d'un substrat contenant du titane sur lequel est formée une couche de nanotubes de TiO₂ orientés, constitués d'un mélange d'oxyde de titane(IV) amorphe et d'anatase, dans un rapport de 10:1 à 1:10, avec une taille de cristallite de 10 à 40 nm et contenant 1 % à 10 % d'ions titane sous la forme de Ti³⁺, tandis que les nanotubes sur le substrat ont une longueur de 0,6 à 7 µm et un diamètre de 20 à 120 nm et sont déposés par un procédé électrochimique sur un substrat en titane avec une surface minimale de 80 cm² et une surface maximale de 1000 cm².

2. Matériau selon la revendication 1, s'il contient au moins 99,75 % de titane.

3. Matériau selon la revendication 1, si le substrat se présente sous la forme d'une feuille de titane.

4. Procédé de préparation d'un matériau ayant des propriétés catalytiques pour purifier l'air des composés organiques volatils, des composés inorganiques volatils, de la poussière et des micro-organismes pendant un procédé comprenant un substrat contenant du titane, qui est soumis à au moins un cycle de traitement impliquant une anodisation par courant électrique dans un électrolyte contenant de l'éthylène glycol, de l'eau et des fluorures, suivi d'un séchage et d'une calcination, **caractérisé en ce qu'**un substrat contenant du titane de qualité technique avec une pureté de titane d'au moins 99, 75%, avec une surface minimale de 80 cm² et une surface maximale de 1000 cm², et les nanotubes sont déposés sur le substrat par un procédé électrochimique suivi d'une anodisation dans une solution électrolytique, tandis que la calcination est effectuée à une température d'au moins 450 C, et les nanotubes résultants ont une longueur de 0,6 à 7 µm et un diamètre de 20 à 120 nm sur la surface du substrat, et contiennent en outre un mélange d'oxyde de titane(IV) amorphe et d'anatase dans un rapport de 10 : 1 à 1:10, avec une taille de cristallite de 10 à 40 nm et contenant entre 1% et 10% d'ions titane sous la forme Ti³⁺.

5. Procédé selon la revendication 4, tout en utilisant une tôle de pureté de titane > 99,75 %, teneur en azote - 0,003 % et teneur en carbone - 0,04 %, teneur en hydrogène - 0,009 %, teneur en fer - 0,02 %, teneur en oxygène - 0,1 %.

6. Procédé selon la revendication 4, alors qu'après les 10e et 15e cycles, au moins 22 % du volume de la solution d'électrolyte sont remplacés par la solution fraîchement préparée.

7. Procédé selon la revendication 4, tandis que le substrat se présente sous la forme d'une feuille de titane.
